(19) Europäisches Patentamt
European Patent Office
Office européen des brevets

(11) EP 2 278 454 B1

(12) **EUROPEAN PATENT SPECIFICATION**

(45) Date of publication and mention
of the grant of the patent:
**11.01.2017 Bulletin 2017/02**

(51) Int Cl.:
***G06F 9/44*** *(2006.01)*    ***G06F 9/48*** *(2006.01)*

(21) Application number: **10166520.6**

(22) Date of filing: **18.06.2010**

(54) **Method for correct-by-construction development of real-time-systems**

Verfahren zur Correct-by-Construction-Entwicklung von Echtzeitsystemen

Procédé de développement correct par construction de systèmes en temps réel

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **19.06.2009 DE 102009025572**

(43) Date of publication of application:
**26.01.2011 Bulletin 2011/04**

(73) Proprietor: **Wolfgang Pree GmbH
5020 Salzburg (AT)**

(72) Inventors:
• **Pree, Wolfgang
5020, Salzburg (AT)**
• **Templ, Josef
4060, Leonding (AT)**

(74) Representative: **Westphal, Mussgnug & Partner
Patentanwälte mbB
Herzog-Wilhelm-Strasse 26
80331 München (DE)**

(56) References cited:
• **HENZINGER T A ET AL: "Time-safety checking for embedded programs", LECTURE NOTES IN COMPUTER SCIENCE - EMBEDDED SOFTWARE. SECOND INTERNATIONAL CONFERENCE, EMSOFT 2002. PROCEEDINGS 7-9 OCT. 2002 GRENOBLE, FRANCE, vol. 2491, 2002, pages 76-92, XP002607182, SPRINGER-VERLAG BERLIN, GERMANY DOI: 10.1007/3-540-45828-X_7 ISBN: 3-540-44307-X**
• **HENZINGER T A ET AL: "Giotto: a time-triggered language for embedded programming", PROCEEDINGS OF THE IEEE IEEE USA, vol. 91, no. 1, January 2003 (2003-01), pages 84-99, XP002607193, ISSN: 0018-9219**

**Description**

The present invention relates to systems that have to meet strict real-time requirements (real-time systems), especially to a method for the correct-by-construction development of real-time control systems.

Real-time systems are often employed in control systems to implement control laws for controlling technical processes. In many applications these real-time systems comprise distributed hardware, i.e. the software for the various tasks that are necessary for control purposes is executed on separated processors. Conventional systems for executing distributed software may comprise a plurality of nodes and a communication channel, wherein the system is configured such that the nodes are allowed to transmit data across the communication channel. Examples of such systems also include so called embedded systems in which the nodes can also be referred to as electronic control units (abbreviated ECUs). An ECU may perform the tasks defined by software and may be encapsulated in the device which it controls.

Examples of embedded systems include automotive systems, automation systems and avionics systems. An automotive system, for example, may in particular include a plurality of devices for operating brakes, a plurality of devices for sensing wheel speeds, a device for sensing the velocity of a vehicle etc. which communicate across a communication channel and which are configured to perform an operation of an anti-blocking system (ABS). Since the operation of an anti-blocking system is safety-critical to the vehicle and its passengers, it is required that repetitive readings of sensors, calculations and updating of actuators are performed periodically, for example, every five milliseconds. In practice, such a system has to fulfill strict real-time requirements, which means that a correctness of an operation depends not only upon a logical correctness of the operation but also upon a time at which it is performed. An operation performed later than a "deadline" defined within the system is, by definition, incorrect, and usually has no value. That is, the control system has to guarantee the compliance with predefined timing requirements.

Conventional software designed for real-time systems is typically configured such that the software is separated into a plurality of tasks which the system has to perform. The tasks can be executed by one ECU (i.e. one node) or by different nodes, whereby each single node may execute one or more tasks. Some tasks may use output signals of sensors as their input, other tasks may provide output signals to actuators. Different tasks may communicate with each other by exchanging data. Thus, a schedule and the execution of tasks may depend on external events which can be detected by the system by means of one or more sensors. Thus, a mode of operation of any system on any node may change over time, and also demands on the communication channel with respect to band width may change over time. However, in the hard real-time system it has to be ensured that a given band width provided by the communication channel is sufficient to guarantee fault free operation of the hard real-time system during each possible combination of operational modes of all of the involved nodes.

It is well-known in the art that the development of absolutely correct embedded systems with hard real-time requirements is difficult, error-prone and thus expensive. This is true for single-node systems as well as for distributed embedded systems.

Various efforts have already been made for improving the design and development of potentially distributed embedded systems. For example, a project called "Giotto" at the University of California at Berkeley, USA resulted in a programming methodology for embedded control systems. This methodology includes a concept of defining a logical execution time of tasks under hard real-time conditions. This concept is referred to as "LET" (Logical Execution Time) and illustrated in more detail in the article of T. A. Henzinger et al., "Giotto: A time-triggered language for embedded programming", Proceedings of the First International Workshop on Embedded Software (EMSOFT), Lecture Notes in Computer Science 2211, Springer-Verlag, 2001, pages 166 to 184. Giotto provides a programming abstraction for hard real-time applications which exhibit time-periodic and multi-modal behavior, as in automotive, aerospace, and manufacturing control. In the publication T.A. Henzinger, C.M. Kirsch, R. Majumdar, S. Matic: "Time-Safety Checking for Embedded Programs", in Proc. 2nd Int. Conf. on Embedded Software (EMSOFT'2002), Grenoble, France, October 7-9, the authors present an approach to the compilation of Giotto, wherein the Giotto compiler generates code for a virtual machine, called the E-machine, which can be ported to different platforms. The Giotto compiler also checks if the generated E-code is time safe for a given platform, that is, if the platform offers sufficient performance to ensure that the E-code is executed in a timely fashion that conforms with the Giotto semantics.

Traditional control design happens at a mathematical level of abstraction, with the control engineer manipulating differential equations and mode switching logic using computer-based systems as tools such as, for example, Matlab/Simulink, Lab-View or MatrixX. Typical activities of the control engineer include modeling of the plant behavior and disturbances, deriving and optimizing control laws, and validating functionality and performance of the model through analysis and simulation. If the validated design is to be implemented in software, it is then handed off to a software engineer who writes code for a particular platform (here the word "platform" is used to stand for a hardware configuration, either a single node or a distributed system, together with a real-time operating system).

Typical activities of the software engineer include decomposing the necessary computational activities into periodic tasks, assigning tasks to CPUs and setting task priorities to meet the desired hard real-time constraints under the given scheduling mechanism and hardware performance, and achieving a degree of fault tolerance through replication and error correction.

Giotto provides an intermediate level of abstraction, which permits the software engineer to communicate more effectively with the control engineer. Specifically, a software architecture of the implementation is defined which specifies its functionality and timing. Functionality and timing are sufficient and necessary for ensuring that the implementation is consistent with the mathematical model of the control design. "Correct-by-construction development" means that the implementation of an embedded system, that corresponds exactly to its specification, is automatically generated. This allows for abstracting away from the realization of the software architecture on a specific platform, and frees the software engineer from worrying about issues such as hardware performance and scheduling mechanism while communicating with the control engineer. After coming up with a Giotto program, the second task of the software engineer is still to implement the program on the given platform. However, in Giotto, this second task, which requires no interaction with the control engineer, is effectively decoupled from the first, and can be automated by increasingly powerful compilers. The separation of logical correctness concerns (functionality and timing) from physical realization concerns (mapping and scheduling) has the added benefit that the timing definition is entirely platform independent and can be compiled on different, even heterogeneous, platforms. The Giotto language, however, is a rather academic approach with limited functionality. It is basically an abstract mathematical model of a time-triggered language with a rather simple tool chain that primarily proofs that it can be implemented, but it is not satisfactory for practical use.

It is an object of the present invention to improve the deficiencies of the Giotto language and to provide a method and a system for the computer-based and automatic correct-by-construction development of real-time-systems that complies with the requirements of real time system design.

The above-mentioned object is solved by the methods of claims 1, 7, and 11 as well as by the systems of claims 6, 12, and 14. Various exemplary embodiments of the invention are covered by the dependent claims.

As one example of the present invention a computer-based method for automatically constructing a real-time system is disclosed. The real-time system includes at least one module, each module having at least one mode. The method comprises: defining a mode period for each mode for a repeated execution of the respective mode by the corresponding module; for each mode, defining one or more synchronous tasks to be executed by the real-time system, whereby each synchronous task is associated with a logical execution time during which the task execution has to be completed; defining an integer number of time-slots for the mode period of each mode; assigning to each task at least one time slot during which the task is to be executed.

According to a second example of the invention the computer-based method for automatically constructing a real-time system comprises: defining one or more synchronous tasks to be executed by the real-time system, whereby each synchronous task is associated with a logical execution time during which the task execution has to be completed; splitting at least one task into a first part and a second part, the first part having a logical execution time shorter than the second part, whereby the first part is configured to calculate an output from at least one input and a precalculated data that is provided by the second part of a prior invocation of the task.

According to another example of the invention the computer-based method for automatically constructing a real-time system comprises: defining one or more synchronous tasks to be executed by the real-time system, whereby each synchronous task is associated with a logical execution time during which the task execution has to be completed; receiving asynchronous events; assigning an asynchronous task to each received event; assigning a priority value to each asynchronous task; queuing the asynchronous tasks according to the priority value; scheduling the execution of the asynchronous tasks during periods when no synchronous task is executed.

Further examples of the invention relate to systems for the computer-based and automatic construction (i.e. design) of real-time systems including hardware and software means appropriately configured to provide the functions discussed above as well as to a software product.

The foregoing as well as other advantageous features of the invention will be more apparent from the following detailed description of exemplary embodiments of the invention with reference to the accompanying drawings. It is noted that not all possible embodiments of the present invention necessarily exhibit each and every, or any, of the advantages identified herein.

FIG. 1    shows a schematic diagram illustrating a system for performing distributed software;

FIG. 2    is a schematic diagram representing exemplary modules analogous to the ones shown in FIG. 1;

FIG. 3    is a schematic diagram for illustrating the concept of the Logical Execution Time (LET);

FIG. 4    is a schematic diagram illustrating concurrent executions of different tasks on a same node;

FIG. 5    is a schematic diagram illustrating the semantics of a LET-based task execution as defined in Giotto;

FIG. 6      is a schematic diagram illustrating the new slot selection that allows a more efficient usage of computing resources;

FIG. 7      is a schematic diagram illustrating the new task splitting and advance calculation that allows a more efficient usage of computing resources;

FIG. 8      is a schematic diagram illustrating the new integration of events (asynchronous activities) into the time-triggered programming model.

In the drawings like components are denoted with the same reference symbol.

A language partly based on the concepts of the Giotto language for specifying a timing behavior of distributed software has been developed by Wolfgang Pree and his team in an ad personam research project at the Paris Lodron University of Salzburg, Austria. This language is referred to "TDL" (Timing Definition Language) and defined in the report of Josef Templ, TDL Specification Report, Technical Report T004 (revises T001), November 2004, pages 1 to 26. The entire contents of this document are incorporated herein by reference.

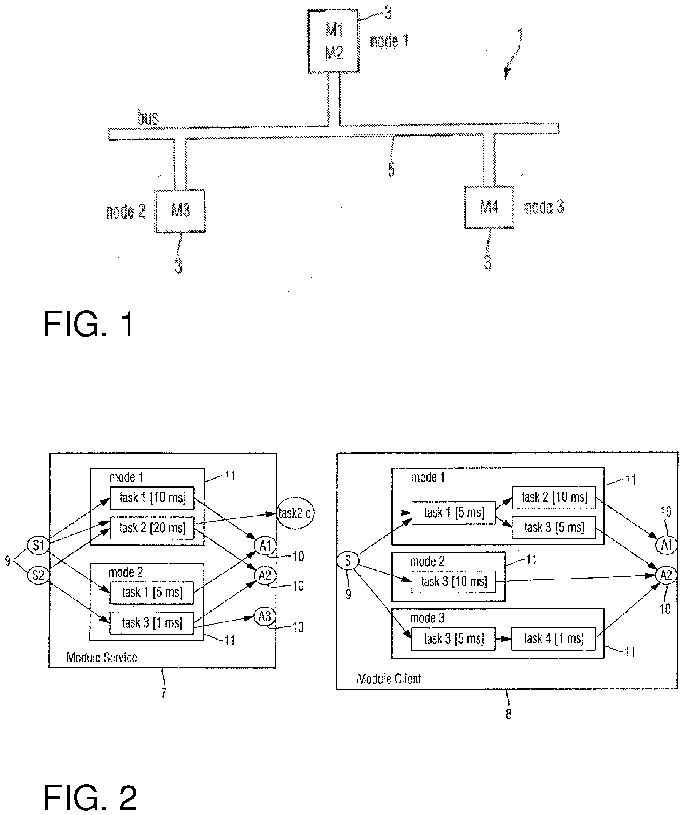

Firstly, the concepts of LET ("logical execution time") and the basic technical terms "module", "mode" and "task" are explained on the basis of an exemplary system for executing (distributed) software that is schematically illustrated in FIG. 1.

FIG. 1 shows a system 1 comprising three nodes 3 labeled as "node 1", "node 2" and "node 3", respectively, and which are connected to a communication channel 5 labeled as "bus". The bus is used for data communication between the nodes 3. The nodes are electronic devices which are in some fields of application, such as the automotive industry, referred to as electronic control units (ECU). Each node may include a dedicated piece of hardware which interfaces the node with the communication channel and which is then commonly referred to as a controller. In the example illustrated in FIG. 1, the communication channel is embodied as a bus having broadcasting semantics which means that data transmitted to the communication channel from one of the nodes may be received by any of the other nodes. The present invention is, however, not limited to such a communication channel but encompasses also communication channels of other suitable topology and semantics.

System 1 is configured to execute software which is composed of several modules M1, M2, M3 and M4. Modules are an example of a method of structuring complex software, and a module generally is a piece of software having an application programming interface (API). Software which is composed of plural modules allows transparent distribution of the software over plural nodes for executing the software. In the example illustrated in FIG. 1, node 1 executes modules M1 and M2, node 2 executes module M3 and node 3 executes module M4.

A more specific example of software composed of two modules is illustrated in FIG. 2. The exemplary software shown in FIG. 2 comprises a first module 7 labeled as "Module Service" and a second module 8 labeled as "Module Client". Each module may comprise a set of sensors 9, a set of actuators 10 and a set of modes 11. The sensors 9 of module 7 are labeled "S1", "S2", and the sensor 9 of module 8 is labeled "S". The actuators 10 of module 7 are labeled as "A1", "A2" and "A3", and the actuators 10 of the module 8 are labeled as "A1" and "A2". Module 7 has two modes 11, labeled as "mode 1" and "mode 2". Module 8 has three modes 11, labeled as "mode 1", "mode 2" and "mode 3".

Each module 7, 8 may be in only one mode at a given time. Mode 1 of module 7 comprises two tasks labeled as "task 1" and "task 2", wherein task 1 is repetitively executed at a first period of ten milliseconds as indicated by "[10 ms]", and task 2 is repetitively executed at a period of twenty milliseconds indicated by "[20 ms]".

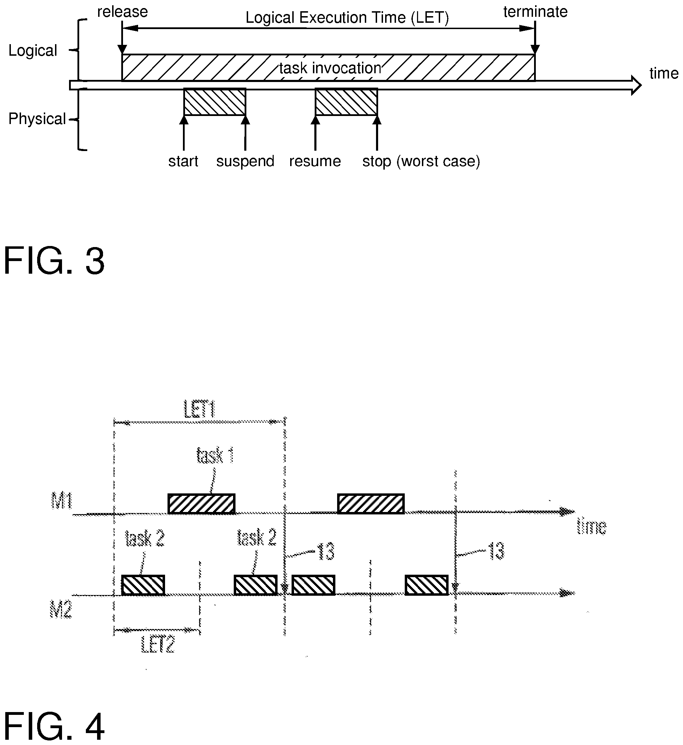

In the present example, task invocations might adhere to the LET semantics as introduced by the Giotto programming model (see the article of T. A. Henzinger et al. mentioned in the introductory part). Task invocation according to LET is illustrated in the schematic diagram of FIG. 3. The inputs of the task are read at the beginning of a LET period. The reading of the inputs is practically done in close to zero time, what is called "logical zero time" (LZT). The beginning of the LET period is indicated by the arrow labeled "release" in FIG. 3. Newly calculated outputs of the task are available exactly at the end of the LET period which is indicated by an arrow labeled "terminate" in FIG. 3. The physical execution of the task on the node is started at a time indicated by an arrow labeled "start" and terminated at a time indicated by an arrow labeled "stop", wherein the physical execution of the task is suspended at a time indicated by an arrow labeled "suspend" and resumed at a time indicated by an arrow labeled "resume".

The time of physical execution within the LET period is not defined by LET. However, it is a requirement that the physical execution of the task has to finish before the end of the LET period. In other words, the start of the physical execution of the task can take place at or after the beginning of the LET period, and the end of the physical execution of the task has to occur at the latest, also for the worst case, before or at the end of the LET period. According to the LET semantics, the results of the calculation of the task are only available to the outside of the task at and after the end of the LET period rather than at the end of the physical execution of the task. This means, that before the end of the LET period, only the "old" results of the previous invocation of the task are available.

Referring back to FIG. 2, task 1 of mode 1 of module 7 is repetitively executed at a period of ten milliseconds wherein the sensor is red exactly at the beginning of the ten-millisecond-period (in LZT) and wherein the results of the calculation of task 1 are made available to actuator A1 exactly at the end of the ten-millisecond-period.

FIG. 2 also illustrates communication between tasks. For example, task 1 in mode 1 of module 8 delivers its output as inputs to task 2 and task 3.

Further, FIG. 2 illustrates communication of tasks across module boundaries. An output of task 2 of mode 1 of module 7 is labeled as "task2.o" and is provided as an input to task 1 of mode 1 of module 8.

The composition of the software of a set of modules and the definition of the tasks of the modules according to LET semantics allows transparent distribution of the software across one or plural nodes, wherein a temporal behavior of the software is guaranteed. In particular, adding a new module will never affect the observable temporal behavior of other modules as long as internal scheduling mechanisms of the respective nodes guarantee a conformance to LET, given that worst case execution times (WCET) and execution rates are known for all tasks.

FIG. 4 is an illustration of the execution of modules M1 and M2 by node 1 shown in FIG. 1. Module M1 has one task, "task 1", with LET1, and module M2 has one task, "task 2", with LET2. Task 2 uses the output of task 1 as input, and LET1 of task 1 is twice as large as LET2 of task 2. The rectangles in FIG. 4 schematically indicate the physical execution times of task 1 and task 2. The outputs of task 1 are made available to task 2 at the end of the logical execution time LET1 of task 1 as indicated by arrow 13. This can be achieved by copying values from a location of memory associated with task 1 to a location of memory associated with task 2. Such copying will take close to zero time (logical zero time, LZT) on a single node.

Both the third and fourth invocations of task 2 shown in FIG. 4 will use the output of the first invocation of task 1. This means that the fourth invocation of task 2 will not use the output of the second invocation of task 1 even though physical execution of the second invocation of task 1 is already completed when the physical execution of the fourth invocation of task 2 begins.

It can be seen from the timing diagrams of FIG. 4 that the concept of LET (logical execution time) makes task execution deterministic but also implies a task execution in every LET period. This might not be required for all tasks and thus would result in an inefficient usage of computing resources. This problem can be alleviated by the introduction of a novel feature called "slot selection" which will be explained in more detail below.

For the further explanation it is assumed that a mode period p is assigned to each mode (cf. modes 11 of FIG. 2) and a frequency number f is assigned to each task of the mode. The activity of a task is performed f times per mode period p. In case of a task invocation, the LET of the task is implicitly specified as p/f and the mode period is filled with f such task invocations.

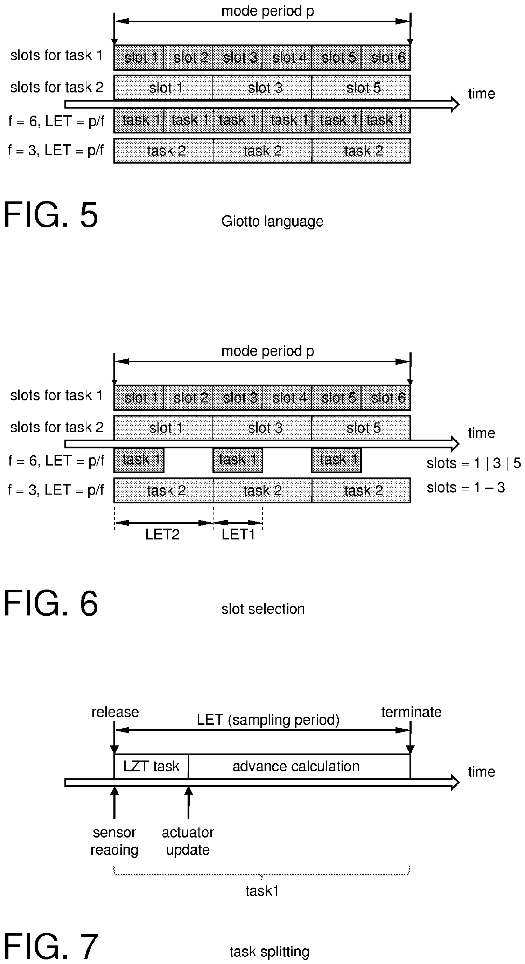

The result of the above-mentioned description of the temporal behavior of the tasks according to the known Giotto language is illustrated in the timing diagrams of FIG. 5. For the following discussion a simple real-time system is considered as an example. The exemplary system has only one module including a single mode. Two tasks "task 1" and "task 2" are repeatedly executed within that mode, whereby task 2 receives an output of task 1 as an input. The mode period p is, for example, 120 ms (milliseconds) and the frequency f is 6. According, the Giotto language the result will be as shown in FIG. 5, that is task 1 is executed six times per a mode period (LET1 = p/f = 120 ms/6 = 20 ms) and task 2 is executed three times per mode period (LET2 = p/f = 120 ms/3 = 40 ms). The above definition of f and p implies that the duration of the mode period p is a common multiple of the LETs (LET1 and LED2 in the present example) of the tasks of the respective mode. Following the concept of LET, the first invocation of task 2 uses, as an input, an initial value of the output of task 1, the second invocation of task 2 uses the output of the second invocation of task 1, and the third invocation of task 2 uses the output of the fourth invocation of task 1. Thus, the output of the first, the third and the fifth invocation of task 1 is discarded. One can see that task 1 is executed redundantly as its output is not used for every invocation. The computation time consumed for the redundant task invocations can not be used for other tasks. As a consequence, the processor executing the code has to be designed for a load higher than actually necessary for the respective control application.

To alleviate this problem a method for defining the temporal behavior of a real-time system according to one example of the present invention allows for assigning the single task invocations to predefined time slots within the mode period p. In the above-discussed example it would be sufficient to execute task 1 (having a LET of 20 ms) only in the first, the third, and the fifth time slot of 20 ms, whereby the duration of a time slot is defined as p/f (the mode period divided by frequency, i.e. the duration of a time slot corresponds to the LET of the respective task). With the present example of the invention the LET of a task and the frequency f are decoupled and the software engineer may specify the time slots during which a task is to be executed and during which the processor is free to process other tasks. The corresponding timing diagram is illustrated in FIG. 6. Accordingly, the redundant execution of tasks may be beneficially avoided. In practice, it allows one to specify, for example, breaks between invocations or to define that a task should be invoked at the beginning or at the end of a mode period only. As another beneficial consequence, it may help the task scheduler to find a feasible schedule and it may reduce the latency in the data flow between invocations of communicating tasks.

In addition to the above-mentioned slot selection the novel features of "task splitting" and "task sequences" will be described below. They avoid the problem of over-sampling of tasks to meet control engineering requirements and thus they also alleviate the problem of inefficient usage of computing resources.

One consequence resulting from the use of the Giotto language for defining the temporal behavior of real time systems is the dead time, that is the delay of a task until its results are available, which equals 100 percent of the sample time assigned to a specific task. This effect can be directly seen in FIG. 3; irrespective of the time when the physical calculation has finished (position "stop" in FIG. 3), the output is not available before the LET of the respective task has elapsed.

It is well known in control theory that, as a rule of thumb, the reaction time of a (digital) controller should be within approximately ten percent of the sample time of a task in order to achieve stable controller behavior. Since, when employing the Giotto model, the reaction time equals exactly the sample time, a high degree of oversampling is required in order to achieve an acceptable result.

Since this oversampling increases the processor load unnecessarily, an improved alternative to the Giotto model would be desirable. According to another example of the invention a method for defining the temporal behavior of real-time systems makes use of the concepts of "task splitting" and "task sequences" as explained below.

A Giotto task is associated with a single external function that represents the body (i.e. its main routine) of the task. In contrast, according to one example of the present invention, a task may be associated with two external functions, i.e. the body of the task is "split" into

(1) a long running function that requires a non-zero LET, and

(2) a LZT function that executes in close to zero time.

Thereby, the LZT function (output function) is called first at the LET start and provides the new output values in a very short time, i.e. in LZT. The long running function is executed during the LET and might prepare the internal state of the task by some advance calculations such that the next call of the LZT function can be done fast, i.e. in LZT. This can be utilized e.g. for digital controllers which need to evaluate a polynomial as the core of their implementation.

The task splitting discussed above allows for performing an update of one or more actuators right after the call of the LZT function. This novel extension is referred to as a so-called "task sequence". A task sequence comprises a task invocation followed by a set of actuator updates. The actuator updates of a task sequence are carried out right after the outputs of the respective task are available, that is at the beginning of the LET if the task is split so that a LZT function is available.

The concepts of task splitting and task sequencing are schematically illustrated in the timing diagram of FIG. 7. The diagram illustrates one invocation of a task labeled "task 1". Task 1 is split into a LZT task and a task called "advance calculation". Task1 reads sensor information at the beginning of the task's LET and, in contrast to known methods, updates the actuators in close to zero time, i.e. in LZT, instead of at the end of the LET. After the actuator update, calculations necessary for the next task invocation might be performed during the LET. For example, if the task has to evaluate a (discrete time) differential equation

$$y_n \; = \; Sum\{k=1,\ldots,N; \; a_k \cdot y_{n-k}\} \; + \; Sum\{k=0,\ldots,L; \; b_k \cdot x_{n-k}\}$$

to implement a digital controller (whereby $x_n$ denotes the sensor readings and $y_n$ the respective controller output with n denoting the sampling number, and L and N denoting the respective polynomial order), the equation

$$y_{PRE} \; = \; Sum\{k=1,\ldots,N; \; a_k \cdot y_{n-k}\} \; + \; Sum\{k=1,\ldots,L; \; b_k \cdot x_{n-k}\}$$

might be calculated in advance during a previous invocation of task 1 and only one multiplication and one addition has to be calculated in the LZT task, that is

$$y_n \; = \; y_{PRE} \; + \; b_0 \cdot x_n .$$

By means of the above-discussed task splitting and task sequencing, digital controllers can be implemented without the unit delay which would be present when using the original LET as proposed by the Giotto language.

Besides time-triggered (i.e. synchronous) tasks, there is often a need for executing event-triggered (i.e. asynchronous) activities as well. According to one example of the invention, the method for defining the temporal behavior of real time systems also considers asynchronous task invocations and actuator updates. An asynchronous activity sequence (i.e. the task invocation that might be followed by an actuator update) may be triggered by the occurrence of an event. Examples of events are: a hardware interrupt, an asynchronous timer, or a task output port update.

A (non maskable) hardware interrupt may usually have the highest priority in the system and may be used, for example, for connecting the system with asynchronous input devices. It may even interrupt synchronous activities. However, the impact of hardware interrupts on the timing of synchronous activities should be minimized. In addition, it is assumed that a maskable interrupt may be switched off until the associated event is executed. This reduces the danger of denial of service due to a large number of interrupts.

Further, a periodic asynchronous timer may also be used as a trigger for asynchronous task invocations. Such a timer is independent from the timer that drives the synchronous activities because it uses its own time base. An asynchronous timer may for example be used as a watchdog for monitoring the execution of the time-triggered operations.

Updating a task output port may trigger an asynchronous task invocation. It is assumed that both a synchronous and an asynchronous port update may be used as a trigger event. In case of a synchronous port update, i.e. a port update performed during a time triggered activity, the TDL semantics takes care that the impact on the timing of the synchronous activities is minimized. Port update events may e.g. be used for limit monitoring or for change notifications.

By integrating asynchronous activities into TDL, the TDL run-time system is able to provide the synchronization of the data flow between synchronous and asynchronous activities. It has been shown that a lock-free synchronization approach with a negligible impact on the timing of the time-triggered activities is possible with the semantics described below.

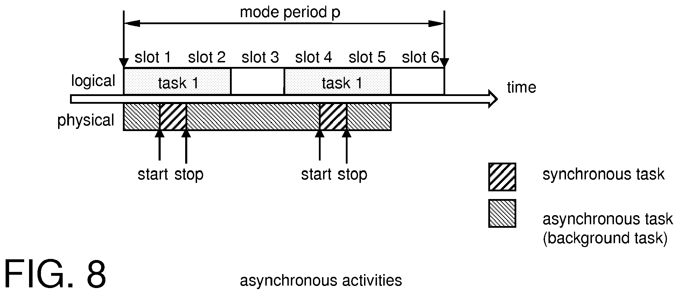

Events may be associated with a priority and are registered in a priority queue when they arrive. Processing the events is delayed and supposed to be performed sequentially by a single background thread that runs whenever there are no time-triggered activities to perform as illustrated in FIG. 8. Reading input ports is done as part of the asynchronous execution, not at the time of registering an event. Output ports are updated right after an asynchronous task invocation has been finished. If an event reoccurs before it has started processing it will not be executed twice but remains registered once. In case of a distributed system, the communication of asynchronous output values to remote nodes is supposed to rely on asynchronous network operations, i.e. it may be delayed.

The technology and tools for generating platform-specific code are described, for example, in: "The TDL:VisualDistributor tool", preeTEC.com, available online: http://www.preetec.com/fileadmin/docs/Technology_Further_Docs/TDL_VisualDistributor_March_2009.pdf.

The TDL:VisualDistributor tool allows a developer (1) to define the topology and the particular properties of a specific platform, (2) to assign the TDL module(s) to the nodes of that platform by simply dragging and dropping TDL modules, and (3) to automatically generate the platform-specific code, in particular communication schedule(s) in case of distributed platforms and code for the run-time system, but also makefiles and any platform-specific files such as OIL-files in case of using the OSEK operating system. The TDL:VisualDistributor tool is implemented as plug-in architecture. Platform specific node- and cluster- plug-ins provide individual code- and communication schedule generators. Depending on the designated platform different sets of properties influence the code generation process.

## Claims

1. A computer-based method for automatically constructing a real-time system with at least one module, each module having at least one mode, the method comprising:

   defining a mode period for each mode for a repeated execution of the respective mode by the corresponding module;
   for each mode, defining one or more synchronous tasks to be executed by the real-time system, whereby each synchronous task is associated with a logical execution time during which the task execution has to be completed;
   defining an integer number of time-slots for the mode period of each mode;
   assigning to each task at least one predefined and specifiable time slot during which the task is to be executed.

2. The method of claim 1, whereby the length of each time slots equals the logic execution time of the task.

3. The method of claim 1 or 2, further comprising

   splitting at least one task into a first part and a second part, the first part having a logical execution time shorter than the second part, whereby the first part is configured to calculate an output from at least one input and a pre-calculated data that is provided by the second part of a prior invocation of the task.

**4.** The method of claim 3, whereby the first part of the task includes an output function, that is invoked on termination of the first part of the respective task.

**5.** The method of one of the claims 1 to 4, further comprising

    receiving asynchronous events;
    assigning an asynchronous task to each received event;
    assigning a priority value to each asynchronous task;
    queuing the asynchronous tasks according to the priority value;
    scheduling the execution of the asynchronous tasks during periods when no synchronous task is executed.

**6.** A computer-based system for the automatic design of real-time systems that include at least one module, each module having at least one mode, the system comprises:

    means configured to define a mode period for each mode for a repeated execution of the respective mode by the corresponding module;
    means configured to define, for each mode, one or more synchronous tasks to be executed by the real-time system, whereby each synchronous task is associated with a logical execution time during which the task execution has to be completed;
    means configured to define an integer number of time-slots for the mode period of each mode;
    means configured to assign to each task at least one predefined and specifiable time slot during which the task is to be executed.

**7.** A computer program stored on an information processing device, the computer program including instructions which, upon execution by the information processing device, carry out one of the methods of claims 1 to 5.

**Patentansprüche**

**1.** Computergestütztes Verfahren zum automatischen Aufbau eines Echtzeitsystems mit mindestens einem Modul, wobei jedes Modul mindestens einen Modus aufweist, wobei das Verfahren aufweist:

    Definieren einer Modusperiode für jeden Modus für eine wiederholte Ausführung des zugehörigen Modus durch das entsprechende Modul;
    Für jeden Modus, Definieren einer oder mehreren synchronen Aufgaben, welche durch das Echtzeitsystem ausgeführt werden müssen, wobei jede synchrone Aufgabe mit einer logischen Ausführungszeit verbunden ist, in der die Ausführung der Aufgabe zum Ende gebracht werden muss;
    Definieren einer Ganzzahl von Zeitschlitzen für die Modusperiode jedes Modus;
    Zuordnen zumindest eines vorgegebenen und bestimmbaren Zeitschlitzes, in dem die Aufgabe ausgeführt werden muss, zu jeder Aufgabe.

**2.** Verfahren gemäß Anspruch 1, wobei die Länge jedes Zeitschlitzes der logischen Ausführungszeit der Aufgabe gleicht.

**3.** Verfahren gemäß Anspruch 1 oder 2, das außerdem aufweist:

    Aufteilen zumindest einer Aufgabe in einen ersten Teil und einen zweiten Teil, wobei der erste Teil eine logische Ausführungszeit aufweist, welche kürzer ist als der zweite Teil, wobei der erste Teil dazu ausgelegt ist, eine Ausgabe zu berechnen aus mindestens einer Eingabe und einem vorberechneten Wert, welcher durch den zweiten Teil einer vorherigen Anrufung der Aufgabe zur Verfügung gestellt wird.

**4.** Verfahren gemäß Anspruch 3, wobei der erste Teil der Aufgabe eine Ausgabefunktion aufweist, welche bei Beendigung des ersten Teils der zugehörigen Aufgabe angerufen wird.

**5.** Verfahren gemäß einem der Ansprüche 1 bis 4, das außerdem aufweist:

    Empfangen asynchroner Ereignisse;
    Zuordnen einer asynchronen Aufgabe zu jedem empfangenen Ereignis;

Zuordnen eines Prioritätswerts zu jeder asynchronen Aufgabe;

Hintereinanderlegen der asynchronen Aufgabe gemäß dem Prioritätswert;

Festlegen der Ausführung der asynchronen Aufgaben in Zeiten, wenn keine synchrone Aufgabe ausgeführt wird.

6. Computergestütztes System für die automatische Gestaltung von Echtzeitsystemen, welche mindestens ein Modul enthalten, wobei jedes Modul mindestens einen Modus aufweist, wobei das System umfasst:

Mittel ausgelegt zum Definieren einer Modusperiode für jeden Modus für eine wiederholte Ausführung des zugehörigen Modus durch das entsprechende Modul;

Mittel ausgelegt zum Definieren, für jeden Modus, einer oder mehreren synchronen Aufgaben, welche durch das Echtzeitsystem ausgeführt werden müssen, wobei jede synchrone Aufgabe mit einer logischen Ausführungszeit verbunden ist, in der die Ausführung der Aufgabe zum Ende gebracht werden muss;

Mittel ausgelegt zum Definieren einer Ganzzahl von Zeitschlitzen für die Modusperiode jedes Modus;

Mittel ausgelegt zum Zuordnen zumindest eines vorgegebenen und bestimmbaren Zeitschlitzes, in dem die Aufgabe ausgeführt werden muss, zu jeder Aufgabe.

7. Datenverarbeitungsprogram gespeichert auf einem informationsverarbeitenden Gerät, wobei das Datenverarbeitungsprogram Anweisungen enthält, welche, bei Ausführung durch das informationsverarbeitende Gerät, ein der Verfahren gemäß der Ansprüche 1 bis 5 durchführt.

## Revendications

1. Procédé informatisé pour la construction automatique d'un système à temps réel avec au moins un module, chaque module ayant au moins un mode, le procédé comprenant :

La définition d'une période de mode pour chaque mode pour une exécution répétée du mode respectif par le module correspondant ;

Pour chaque mode, la définition d'une ou plusieurs tâches synchrones à exécuter par le système en temps réel, chaque tâche synchrone étant liée à un temps d'exécution logique durant lequel l'exécution de la tâche doit être achevée ;

La définition d'un nombre entier d'intervalles de temps pour la période de mode de chaque mode ;

L'attribution à chaque tâche d'au moins un intervalle de temps prédéfini et déterminable pendant lequel la tâche doit être exécutée.

2. Procédé selon la revendication 1, la longueur de chaque intervalle de temps étant égale au temps d'exécution logique de chaque tâche.

3. Procédé selon la revendication 1 ou 2, comprenant en outre

La division d'au moins une tâche en une première partie et une seconde partie, la première partie ayant un temps d'exécution logique plus court que la seconde partie, la première partie étant configurée pour calculer une sortie à partir d'au moins une entrée et une donnée calculée au préalable qui est fournie par la seconde partie d'une invocation antérieure de la tâche.

4. Procédé selon la revendication 3, où la première partie de la tâche comporte une fonction de sortie qui est invoquée à la fin de la première partie de la tâche respective.

5. Procédé selon l'une des revendications 1 à 4, comprenant en outre

La réception d'événements asynchrones ;

L'attribution d'une tâche asynchrone à chaque événement reçu ;

L'attribution d'une valeur de priorité à chaque tâche asynchrone ;

La mise en file d'attente des tâches asynchrones en fonction de la valeur de priorité ;

La programmation de l'exécution des tâches asynchrones pendant des périodes où aucune tâche asynchrone n'est exécutée.

6. Système informatisé pour la conception automatique de systèmes à temps réel contenant au moins un module, chaque module ayant au moins un mode, le système comprenant :

Des moyens configurés pour la définition d'une période de mode pour chaque mode pour une exécution répétée du mode respectif par le module correspondant ;
Des moyens configurés pour la définition, pour chaque mode, d'une ou plusieurs tâches synchrones à exécuter par le système en temps réel, chaque tâche synchrone étant liée à un temps d'exécution logique durant lequel l'exécution de la tâche doit être achevée ;
Des moyens configurés pour la définition d'un nombre entier d'intervalles de temps pour la période de mode de chaque mode ;
Des moyens configurés pour l'attribution à chaque tâche d'au moins un intervalle de temps prédéfini et déterminable pendant lequel la tâche doit être exécutée.

7. Programme informatique stocké sur un dispositif de traitement d'information, le programme informatique contenant des instructions qui, lors de l'exécution par le dispositif de traitement d'information, réalisent l'un des procédés selon les revendications 1 à 5.

# FIG. 1

# FIG. 2

# FIG. 3

# FIG. 4

# FIG. 5

Giotto language

# FIG. 6

slot selection

# FIG. 7

task splitting

FIG. 8        asynchronous activities

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Giotto: A time-triggered language for embedded programming. **T. A. HENZINGER et al.** Proceedings of the First International Workshop on Embedded Software (EMSOFT), Lecture Notes in Computer Science 2211. Springer-Verlag, 2001, 166-184

- **T.A. HENZINGER ; C.M. KIRSCH ; R. MAJUMDAR ; S. MATIC.** Time-Safety Checking for Embedded Programs. *Proc. 2nd Int. Conf. on Embedded Software (EMSOFT'2002)*
- *Josef Templ, TDL Specification Report, Technical Report T004 (revises T001),* November 2004, 1-26